# EUROPEAN PATENT APPLICATION

(11) **EP 3 409 964 A1**
(43) Date of publication of application: **05.12.2018**
(21) Application number: 17173600.2
(22) Date of filing: 31.05.2017
(51) Int. Cl.: F16D 1/02, F16D 1/10

(54) **A COUPLING UNIT, A USE THEREOF AND A METHOD FOR CONNECTING TO SHAFTS**

(71) Applicant: ABB Schweiz AG, 5400 Baden (CH)
(72) Inventor: PAANANEN, Tommi, 722 23 Västerås (SE)
(74) Representative: Savela, Reino Aleksi

(57) **Abstract**

The invention relates to a coupling unit (1) for coaxially connecting two shafts (6, 7) to each other. The coupling unit has first spline means (2) having a number of first projections (4) and being arranged for non-rotatable connection to a first shaft (6). The coupling means also has second spline means (3) having a number of second projections (5) arranged for non-rotatable connection to a second shaft (7).

According to the invention, the number of first projections (4) is higher than the number of second projections (5) with the restriction that the number of first projections (4) is not an integer multiple of the number of second projections (5).

The invention also relates to a use of the invented coupling unit, and to a method for connecting to shafts together at a required relative angular position.

## Description

### FIELD OF INVENTION

The present invention in a first aspect relates to a coupling unit for connecting two shafts to each other and having first spline means having a number of first projections and being arranged for non-rotatable connection to a first shaft and second spline means having a number of second projections arranged for non-rotatable connection to a second shaft. The invention also relates to a pair of connected shaft.

According to a second aspect of the invention it relates to a use of the invented coupling unit.

According to a third aspect of the invention it relates to a method for coaxially connecting two shafts to each other in a specific angular position relative to each other.

Spline means in the present application is to be understood in a broad sense meaning a connection means that includes a profile with a plurality of radial projections from a base circle. Spline means in the sense of the present application thus is not restricted to common gear-like splines but includes e.g. a triangular or other regular polygonal shape.

### BACKGROUND OF INVENTION

In many situations it is required to connect two shafts to each other at a certain relative angle. This can be made by a friction connection between the shafts, e. g. by means of a sleeve connected by friction to at least one of the shafts. Through a friction connection the two shafts can be turned to the exact desired relative angular position and be joined. A big drawback with this connection is that it can slide resulting in a deviation from the required angular relative position.

Alternatively the connection may be obtained by using splines, e.g. with a bushing having internal splines matching external splines on each of the shafts. Thereby the risk for sliding is eliminated. A drawback with this kind of connection, however, is that the precision is not so god. If the spline means e.g. has 20 teeth, the relative position can be regulated in steps of 18°, which in most cases is far from sufficient. The angular precision will of course be increased the higher the the number of teeth in the spline means is. However, the number of teeth has an upper limit for strength and other practical consideration, so that a sufficient precision is hard to attain this way.

Representative examples of spline-based coupling devices for connecting two shafts are disclosed in US 5660591, US 2008/0009354, US 2012/0219351, US 2012/00117929 and US 2016/0333942.

If the shafts need to be connected to each other with a certain angular precision, the devices of these disclosures suffer from the above described general drawback entailing a spline-based connection.

### SUMMARY OF INVENTION

The object of the present invention is to overcome the problem with low angular precision with a conventional spline connection.

This is according to the first aspect of the present invention achieved in that a coupling unit of the kind specified in the preamble of claim 1 includes the specific feature specified in the characterizing portion of the claim. The coupling unit thus has a number of first projections that is higher than the number of second projections, with the restriction that the number of first projections is not an integer multiple of the number of second projections.

Thanks to the different number of projections of the two spline means a much larger number of relative angular positions will be attained. The first shaft can be mounted in a plurality of angular positions and the second shaft can also be mounted in a plurality of positions. Since the mean angle between the possible positions of the first shaft differs from that of the second shaft the number of possible relative angular position of the two shafts will be much higher than the number of projections of either of the spline means. This means that the possibility to adjust the relative position of the shafts to what is required is drastically increased in comparison with a conventional coupling having a spline means with a number of projections corresponding to the mentioned number of first projections.

The coupling unit may be a single piece or consist of one or more components attached to each other. Although it is normally appropriate that the first spline means and the second spline means have substantially similar shape of their respective projections, it is to be understood that the first spline means and the second spline means may be different from each other in this respect.

According to a preferred embodiment of the invented coupling unit, the number of the second projections is at least five.

Since the angular adjustment precision increases the higher the number of the projection is, the advantages of the invention are more pertinent above this lower limit.

According to a further preferred embodiment, the number of said second projections is in the range of 10-50

With reference to what is said next above, this higher lower limit still further reflects a high number of relative angular positions. With the present invention, a precise adjustment is achieved without a very high number of projections. Therefor it normally is sufficient with a number of projections lower than the upper limit, in most cases substantially lower. It is advantageous not to need an excess number of projections. The spline means thereby is more simple to manufacture and to obtain a sufficient strength.

According to a further preferred embodiment, the number of the first projections is as most five higher than the number of the second projections.

In most cases the resulting angular adjustability will be more precise, the smaller the difference between the number of projections in the spline means is. Therefor it is advantageous with this limit regarding that difference.

According to a further preferred embodiment, the number of the first projections is as most three higher than the number of the second projections, preferably only one higher.

With reference to what is said next above the mentioned advantage is still more accentuated with this smaller difference. A small difference also results in a more homogenous coupling unit which improves its strength. Preferably the number of first projections is only one higher than the number of second projections.

According to a further preferred embodiment, the number of the first projections and the number of the second projections do not have a common integer divisor that is larger than five and resulting in a respective quota that is an integer.

When the respective numbers have a common integer divisor that results in a respective quota that is an integer, the possible angular positions are correspondingly reduced. This reduction is higher the larger the common divisor is. Therefor it is advantageous to provide this mathematical restriction in order to obtain sufficient angular adjustment possibility. This mathematical restriction may be expressed by the condition: N/M ≠ (aₓn)/(aₓm), where N and M are the numbers of projections and a, n and m are integers with a>5.

According to a further preferred embodiment, the number of the first projections and the number of the second projection do not have a common integer divisor at all and resulting in a respective quota that is an integer.

Thereby the number of possible relative angular positions of the shaft will not be reduced at all, but will correspond to the product of the numbers of projections. In the context of this application, the integer divisor one is excluded from the above restriction, since any number of projections of course may be divided by one.

According to a further preferred embodiment, the diameters of the two spline means are different.

This is an advantageous adaption in case the coupling unit is intended to connect two shafts of different diameters. The diameter of the spline means in this application is to be understood as referring to a circle having a diameter that is the mean value between the diameter of a circle through the tops of the projections and the diameter of a circle through the intermediate bottoms.

According to an alternative preferred embodiment, the diameters of the two spline means are equal.

This alternative is useful in case the shafts to be connected have equal or substantially equal diameters.

According to a further preferred embodiment, one of the spline means is internal spline means and the other spline means is external spline means.

Through this embodiment the axial extension of the coupling unit may be minimized, since the spline means may be arranged at the same axial location, one outside the other. Thereby space in the axial direction may be saved.

According to an alternative preferred embodiment, both spline means are either internal spline means or external spline means.

This results in a coupling unit that is easy to manufacture and to handle when connecting and adjusting the angular positions of the shafts. The unit will also be relatively compact.

According to a further preferred embodiment, the projections of at least one of the spline means are equally distributed in the circumferential direction.

This simplifies an adequate angular adjustment when connecting the two shafts. The coupling unit will also be more homogenous with better strength properties. Preferably the projections of both spline means are distributed in this way.

According to a further preferred embodiment one of the first projections and one of the second projections are axially aligned, and the coupling unit is provided with a marking indicating the aligned projections.

When mounting to shafts to the coupling it may be useful to know this zero position of the two splines so that it will be easy to connect the shafts rapidly and correctly.

The invention also relates to a pair of connected shafts including the coupling unit according to the invention, in particular to any of the preferred embodiments thereof, whereby a first shaft has first shaft spline means matching the first spline means of the coupling unit and a second shaft having a second shaft spline means matching the second spline means of the coupling unit.

According to the second aspect of the invention, the object is achieved in that the invented coupling unit, in particular according to any of the preferred embodiments thereof, is used for connecting two shafts to each other in a specific angular position relative to each other.

According to the third aspect of the invention, the object is achieved in that the method specified in the preamble of claim 16 includes the specific measures specified in the characterizing portion thereof. The method thus includes:
- providing a coupling unit according to the present invention, in particular according to any of the preferred embodiments thereof,
- providing a shaft with a first shaft spline means matching the first spline means of the coupling unit,
- providing a second shaft with a second shaft spline means matching the second spline means of the coupling unit,
- turning the first shaft to a position corresponding to the required angular position
- connecting the first shaft spline means to the first spline means, while the first shaft is in said position
- turning the second shaft to a position corresponding to said specific angular position, and
- connecting the second shaft spline means to the second spline means, while the second shaft is in said position.

The invented pair of connected shafts, the invented use, the invented method and the preferred embodiments of these have advantages as those of the invented coupling unit and the preferred embodiments thereof, which advantages have been described above.

The above specified preferred embodiments of the invention are set out in the dependent claims. It is to be understood that further preferred embodiments may be constituted by any possible combination of features in the preferred embodiments and by any possible combination of these features with features described in the description of examples below.

### BRIEF DESCRIPTION OF THE DRAWINGS

Fig. 1 schematically illustrates a first example of a coupling unit according to the invention.
Fig. 2 schematically illustrates a second example of a coupling unit according to the invention.
Fig, 3 schematically illustrates a third example of a coupling unit according to the invention.
Fig. 4 is a diagram illustrating the principle of the invention.
Fig. 5 schematically illustrates a fourth example of the invention.
Fig. 6 is a side view of a coupling unit similar to that illustrated in fig. 2.
Fig. 7 is a top (left) and perspective view of a coupling similar to that of fig. 3.

### DESCRIPTION OF EXAMPLES

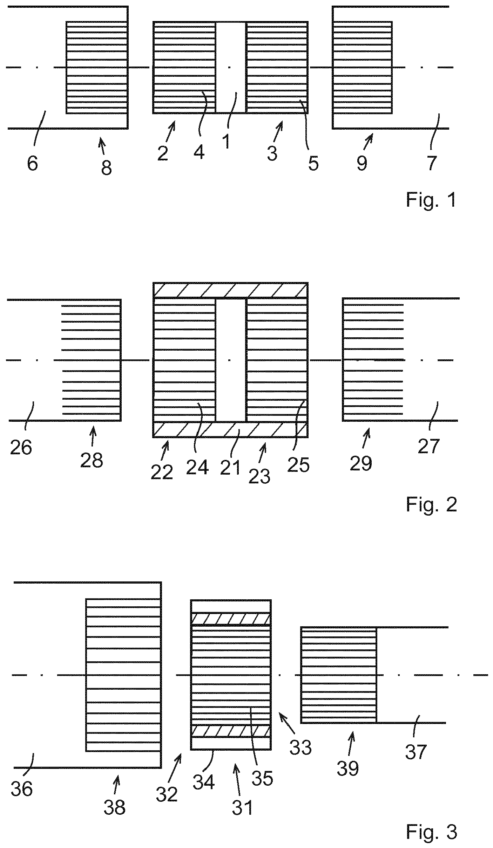

Fig. 1 schematically in a side view illustrates a first example of a coupling unit according to the invention. The figure in a longitudinal section also illustrates a first shaft 6 and a second shaft 7, which are intended to be connected to each other by the connection unit 1.

The connection unit 1 has first spline means 2 at one axial end thereof and second spline means 3 at the other end. Both the spline means 2, 3 are external, forming male components. The diameters of the two spline means 2, 3 are substantially the same. The number of projections 4, e.g. teeth of the first spline means 2 is higher than the number of projections 5 of the second spline means 3. As an example the first spline means 2 may have 22 projections, and the second spline means 3 may have 21 projections.

The first shaft 6 has female shaft spline means 8, matching the first spline means 2 of the coupling unit 1. The second shaft 7 has female shaft spline means 9 matching the second spline means 3 of the connection unit 1.

The first shaft 6 may be connected to the coupling unit 1 in a plurality of angular positions corresponding to the number of projections 4 in the first spline means 2 of the coupling unit 1. In this example there will be 22 different positions with an angular distance of 16, 36°. The second shaft 7 correspondingly may be connected to the coupling unit in 21 different angular positions with an angular distance of 17, 14°. The possible relative angular positions of the shafts in relation to each other thereby will be 21x22 = 462. This represents an angular distance between two adjacent positions of 0,78°, i.e. thee adjustment increment. This provides a very fine adjustment possibility of the relative angular positions of the shaft to meet a certain required relative angular position

Fig 2 is a longitudinal section through a second example of the coupling unit 21. The shafts 26, 27 to be connected are illustrated in a respective side view. In this example both spline means 22, 23 of the coupling unit 21 are of female type for cooperation with male shaft spline means 28, 29 on the shafts 26, 27. Provided that the numbers of projections correspond to those of the first example also this coupling unit 21 will allow an angular relative position adjustment in steps of 0,78°.

In fig 3 a third example is illustrated in a side view of the second shaft 37, and sections through the coupling unit 31 and the first shaft 36. In this example the coupling unit has external spline means 32 for cooperating with female shaft spline means 38 on the first shaft 36, and internal spline means 33 for cooperating with male shaft spline means 39 on the second 37 shaft. The angular adjustment possibilities correspond to those of the examples above.

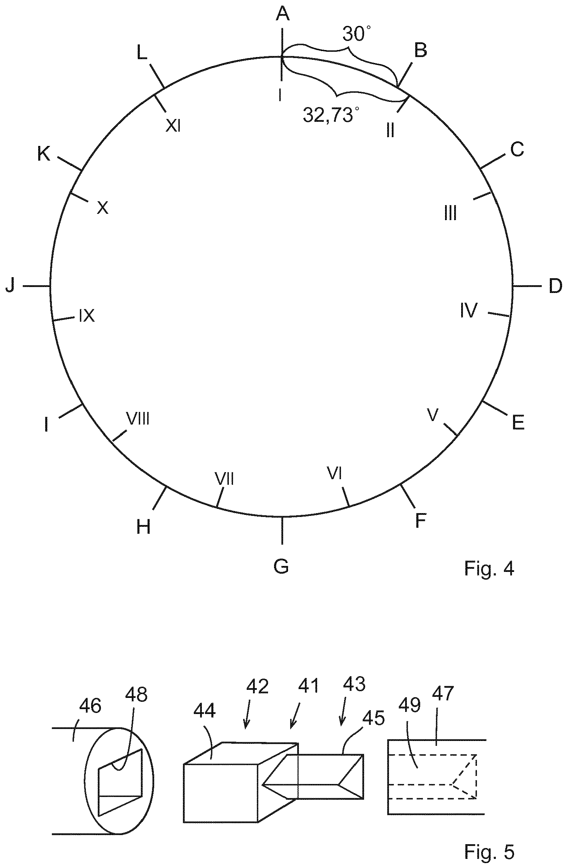

The principle of the invention is visualized in the diagram of fig 4. The circle represents the coupling unit. Externally of the circle a number of projections A - L of the first spline means are indicated, and internally a number of projections I - XI of the second spline mines are indicated. The number of projections is 12 and 11 respectively, resulting in 132 possible relative angular positions, represented by any possible combination of A - L with I - XI.

The first shaft with first shaft spline means matching the spline means having the projections A - L, may be positioned in 12 angular positions relative the projections A - L, the second shaft correspondingly in 11 angular positions relative to the projections I - XI.

The two matching shaft spline means are supposed to have corresponding valleys A' to L' (not shown) and I' to XI', respectively. Presume that the first shaft has a component, e.g. an eccentric disc or a key at, a certain circumferential position, that the second shaft also has a corresponding component. and that these components should be located at a certain relative angular position when the shafts are connected.

If the first shaft is positioned such that a valley A' aligns with projection A, and the second shaft is positioned such that a valley I' aligns with the projection I, the angle between the relative position of the components thereby can be defined as α.

If now turning he first shaft so that its valley A' aligns with the projection B, and turning the second shaft such that its valley I' aligns with the projection II, a new relative angular position is at hand.. The first shaft has turned 30° and the second shaft has turned 32, 72°. The relative position between the components now will be α + 2,72°. By using all possible combinations of A to L and I to XI, the angular adjustment of the relative position of the components may be done with an increment of 2,72°. If both spline means would have twelve projections, the increment would have been 30°.

Fig 5 illustrates a fourth example of the invention, where the coupling unit 41 has a square profile at one end and a regular triangular shape at the other. The square profile is the first spline means 42 with its corners being the first projections 44 and matching a square female part 48 of the first shaft 46. The triangle is the second spline means 43 with the corners being the second projections 45 and matching a triangular female part 49 of the second shaft 47. The adjustment increment in this example will be 30°

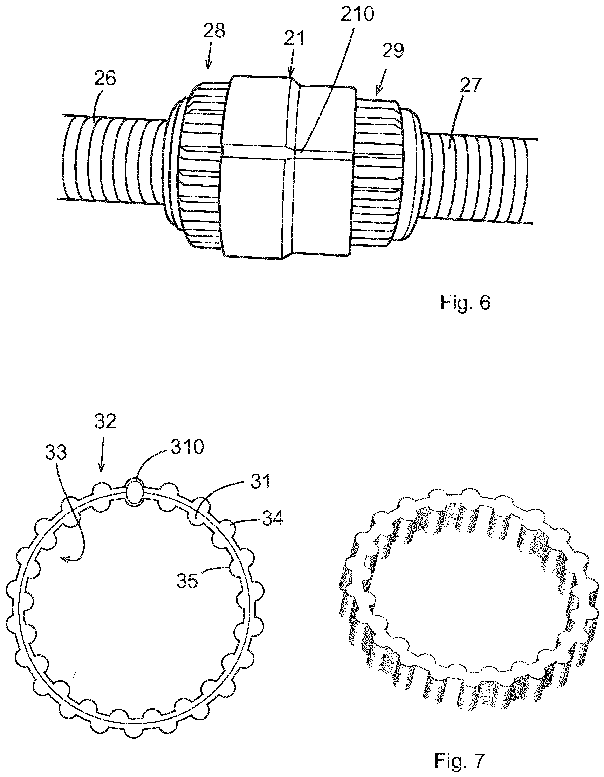

In fig. 6, illustrating a coupling unit 21 similar to that of fig. 2, the two shafts 26, 27 are mounted in a zero position. This means that the two shafts are connected to aligned projections of the coupling unit 21 with aligned depressions. This corresponds to the position A + I of fig 4. The position where the projections of the coupling unit 21 are aligned is provided with a marking 210.

Fig. 7 correspondingly illustrates such a marking 310 of the aligned projections of a coupling unit 31 of similar kind as that of fig. 3. To the left, a top view and to the right, a perspective view.

## Claims

1. A coupling unit (1, 21, 31, 41) for coaxially connecting two shafts (6, 7, 26, 27, 36, 37, 46, 47) to each other and having first spline means (2, 22, 32,42) having a number of first projections (4, 24, 34, 44) and being arranged for non-rotatable connection to a first shaft (6, 26, 36, 46) and second spline means (3, 23, 33, 43) having a number of second projections (5, 25, 35, 45) arranged for non-rotatable connection to a second shaft (7, 27, 37,47), **characterized in that** the number of first projections (4, 24, 34, 44) is higher than the number of second projections (5, 25, 35, 45) with the restriction that the number of first projections (4, 24, 34, 44) is not an integer multiple of the number of second projections (5, 25, 35, 45).

2. A coupling unit according to claim 1, wherein the number of said second projections (5, 25, 35) is at least five.

3. A coupling unit according to claim 2, wherein the number of said second projections (5, 25, 35) is in the range of 10-50.

4. A coupling unit according to any one of claims 1-3, wherein the number of said first projections (4, 24, 34, 44) is as most five higher than the number of said second projections (5, 25, 35, 45).

5. A coupling unit according to claim 4, wherein the number of said first projections (4, 24, 34, 44) is as most three higher than the number of said second projections (5, 25, 35, 45), preferably one number higher.

6. A coupling unit according to any one of claims 1-5, wherein the number of said first projections (4, 24, 34, 44) and the number of said second projections (5, 25, 35, 45) do not have a common integer divisor that is larger than five and resulting in a respective quota that is an integer.

7. A coupling unit according to claim 6, wherein the number of said first projections (4, 24, 34, 44) and the number of said second projections (5, 25, 35, 45) do not have a common integer divisor at all and resulting in a respective quota that is an integer.

8. A coupling unit according to any one of claims 1-6, wherein the diameters of the first spline means (32, 42), and second spline means (33, 43) are different.

9. A coupling unit according to any one of claims 1-6, wherein the diameters of the two first spline means (2, 22) and the second spline means (3, 23) are equal.

10. A coupling unit according to any one of claims 1-9, wherein one of the spline means (33) is internal spline means, and the other spline means (32) is external spline means.

11. A coupling unit according to any one of claims 1-9 wherein both spline means (2, 3, 22, 23, 42, 43) are either internal spline means or external spline means.

12. A coupling unit according to any one of claims 1-11, wherein the projections (4, 24 34, 44, 5, 25, 35, 45) of at least one of said spline means (2, 3, 22, 23, 32, 33, 42, 43) are equally distributed in the circumferential direction.

13. A coupling unit according to any one of claims 1-12, wherein one of the first projections and one of the second projections are axially aligned and the coupling unit is provided with a marking (210, 310), indicating the position of the aligned projections.

14. A pair of connected shafts including the coupling unit (2, 21, 31, 41) according to any one of claims 1-13 and a first shaft (6, 26, 36, 46)) having first shaft spline means (8, 28, 38, 48)) matching said first spline means (2, 22, 32, 42) of the coupling unit and a second shaft (7, 27, 37, 47) having a second shaft spline means (9, 29, 39, 49) matching said second spline means (3, 23, 33, 43) of the coupling unit.

15. A use of the coupling unit according to any one of claims 1-13 for connecting two shafts to each other in a specific angular position relative to each other.

16. A method for coaxially connecting two shafts to each other in a specific angular position relative to each other, **characterized by**
- providing a coupling unit (1, 21, 31, 41) according to any of claims 1 - 13,
- providing a shaft (6, 26, 36, 46) with a first shaft spline means (8, 28, 38, 48) matching the first spline means (2, 22, 32, 42) of the coupling unit (1, 21, 31, 41),
- providing a second shaft (7, 27, 37, 47) with a second shaft spline means (9, 29, 39, 49) matching the second spline means (3, 23, 33, 43) of the coupling unit (1, 21, 31, 41),
- turning the first shaft (6, 26, 36, 46) to a position corresponding to said specific angular position,
- connecting the first shaft spline means (8, 28, 38, 48) to the first spline means (2, 22, 32, 42) while the first shaft (6, 26, 36, 46) is in said position,
- turning the second shaft (7, 27, 37, 47) to a position corresponding to said specific angular position, and
- connecting the second shaft spline means (9, 29, 39, 49) to the second spline means (3, 23, 33, 43), while the second shaft (7, 27, 37, 47) is in said position.
